# EUROPEAN PATENT APPLICATION

(11) **EP 4 835 845 A1**
(43) Date of publication of application: **04.11.2026**
(21) Application number: 24910685.7
(22) Date of filing: 10.12.2024
(51) Int. Cl.: G06V 20/58

(54) **DETECTION METHOD AND APPARATUS, AND VEHICLE**

(30) Priority: 28.12.2023 CN 202311836981
(71) Applicant: Yinwang Intelligent Technologies Co., Ltd., Shenzhen, Guangdong 518110 (CN)
(72) Inventor: WANG, Peixuan, Shenzhen, Guangdong 518110 (CN); YUAN, Zhibo, Shenzhen, Guangdong 518110 (CN); JIANG, Xuesong, Shenzhen, Guangdong 518110 (CN)
(74) Representative: Henselmann, Alexander Gerhard
(86) International application number: PCT/CN2024/138054
(87) International publication number: WO 2025/139754

(57) **Abstract**

This application provides a detection method and apparatus, and a vehicle, and may be applied to the field of intelligent driving. The method includes: obtaining an image of surroundings of a vehicle, where the image includes an obstacle and information about a lane line associated with the obstacle, and a lane in which the vehicle is located is adjacent to a lane in which the obstacle is located; inputting the image into a prediction model to obtain a distance between the obstacle and the lane line, where the prediction model is trained using a sample data set, and the sample data set includes an image of a sample obstacle, an image of a lane line associated with the sample obstacle, and a distance between the sample obstacle and the lane line; and determining, based on the distance between the obstacle and the lane line, whether the obstacle is making a lane change into the lane in which the vehicle is located. Embodiments of this application may be applied to intelligent vehicles or electric vehicles to avoid missed detection or false detection of an obstacle performing a cut-in into a lane in which a vehicle is located, thereby helping improve riding safety of a user.

## Description

This application claims priority to Chinese Patent Application No. 202311836981.9, filed with the China National Intellectual Property Administration on December 28, 2023 and entitled "DETECTION METHOD AND APPARATUS, AND VEHICLE", which is incorporated herein by reference in its entirety.

### TECHNICAL FIELD

This application relates to the field of intelligent driving, and more specifically, to a detection method and apparatus, and a vehicle.

### BACKGROUND

Autonomous driving perception technology uses sensors such as lidars, cameras, and millimeter-wave radars to perceive a surrounding environment of a vehicle during traveling. In current cut-in (cut-in) scenarios, the vehicle needs to detect whether an obstacle in an adjacent lane is performing a cut-in into a lane in which the vehicle is located, to determine whether it is necessary to control the vehicle to decelerate and yield.

In existing solutions, a relative positional relationship between an obstacle and a lane line is determined based on an absolute position of the obstacle and an absolute position of the lane line. This approach relies on calculation accuracy of the absolute position of the obstacle and the absolute position of the lane line. An error in a calculation result of either absolute position may lead to missed detection or false detection of the obstacle performing a cut-in into the lane in which the vehicle is located. Consequently, the vehicle may perform an operation that does not meet expectations of a user, compromising riding experience of the user.

### SUMMARY

This application provides a detection method and apparatus, and a vehicle, to avoid missed detection or false detection of an obstacle performing a cut-in into a lane in which a vehicle is located, thereby helping improve riding safety of a user.

According to a first aspect, a detection method is provided. The method includes: obtaining a first image of surroundings of a vehicle, where the vehicle is located in a first lane, the first image includes an obstacle and information about a first lane line associated with the obstacle, the first lane line is a lane line of a second lane, and the first lane is adjacent to the second lane; inputting the first image into a prediction model to obtain a distance between the obstacle and the first lane line, where the prediction model is trained using a sample data set, and the sample data set includes an image of a sample obstacle, an image of a second lane line associated with the sample obstacle, and a distance between the sample obstacle and the second lane line; and determining, based on the distance between the obstacle and the first lane line, whether the obstacle is making a lane change into the first lane.

Based on the foregoing technical solution, a relative positional relationship between an obstacle and the lane line may be predicted by inputting the image of the surroundings of the vehicle into the prediction model. Therefore, the relative positional relationship between the obstacle and the lane line does not need to be determined based on an absolute position of the obstacle and an absolute position of the lane line. This helps reduce a requirement for calculation accuracy of the absolute position of the obstacle and the absolute position of the lane line, and also helps reduce complexity of calculating the relative positional relationship between the obstacle and the lane line. In addition, based on the predicted relative positional relationship between the obstacle and the lane line, the vehicle can accurately determine whether the obstacle is performing a cut-in into the lane in which the vehicle is located, to avoid missed detection or false detection of the obstacle performing a cut-in into the lane in which the vehicle is located, thereby helping improve riding safety and riding experience of a user.

In some possible implementations, the obstacle may be a vehicle in the second lane.

The foregoing detection manner is described using an example in which the image is input into the prediction model to obtain the distance between the obstacle and the first lane line. This embodiment of this application is not limited thereto. For example, data collected by a sensing apparatus (for example, a lidar or a millimeter-wave radar) may be further input into the prediction model to obtain the distance between the obstacle and the first lane line.

In some possible implementations, the distance between the obstacle and the first lane line may be a real physical distance or a pixel distance between the obstacle and the first lane line.

The real physical distance between the obstacle and the first lane line may also be referred to as a 3-dimensional (3-dimensional, 3D) distance between the obstacle and the first lane line, and the pixel distance between the obstacle and the lane line may also be referred to as a 2-dimensional (2-dimensional, 2D) distance between the obstacle and the first lane line.

With reference to the first aspect, in some implementations of the first aspect, the method further includes: obtaining a first detection box of the obstacle and the information about the first lane line; and determining, based on the distance between the obstacle and the first lane line, whether the obstacle is making the lane change into the first lane includes: correcting the first detection box based on the distance between the obstacle and the first lane line to obtain a second detection box; and determining, based on the second detection box and the information about the first lane line, whether the obstacle is making the lane change into the first lane.

In some possible implementations, the first detection box is determined by a first perception network, and the information about the first lane line is determined by a second perception network.

In some possible implementations, the first perception network and the second perception network are separately connected to a planning and control module. For example, the first perception network may send information about the second detection box after correction to the planning and control module, and the second perception network may send information about the calculated lane line to the planning and control module.

In some possible implementations, a connection may also be established between the first perception network and the second perception network. The first perception network may receive the information about the first lane line sent by the second perception network.

For example, the first perception network may be a dynamic perception network, and the dynamic perception network may be configured to detect a moving object around the vehicle.

For example, the second perception network may be a static perception network, and the static perception network may be configured to detect a stationary object around the vehicle.

Currently, perception results of the absolute position of the obstacle (which may be represented by the first detection box) and the absolute position of the lane line come from two different perception networks. To correctly detect the relative positional relationship between the obstacle and the lane line, the two perception networks need to accurately detect the absolute position of the obstacle and the absolute position of the lane line, respectively. In this case, the two perception networks both have high accuracy requirements. Once a perception result of either perception network is inaccurate, the relative positional relationship between the obstacle and the lane line is calculated inaccurately. Consequently, the planning and control module performs an operation that compromises user experience, thereby compromising riding experience of the user.

Based on the foregoing technical solution, after the relative positional relationship between the obstacle and the lane line predicted using the prediction model, the first detection box may be corrected using the relative positional relationship between the obstacle and the lane line. The relative positional relationship between the obstacle and the lane lines is determined based on the second detection box after correction and the information about the lane line, so that a problem of misjudgment of the planning and control module can be avoided, which helps the planning and control module make more accurate decisions, thereby helping improve riding experience of the user. In addition, in this manner, the planning and control module does not need to be changed, and information received by the planning and control module is still the information about the detection boxes and the information about the lane line.

With reference to the first aspect, in some implementations of the first aspect, correcting the first detection box based on the distance between the obstacle and the first lane line includes: correcting the first detection box based on the distance between the obstacle and the first lane line when the distance between the obstacle and the first lane line does not match a distance between the first detection box and the first lane line.

Based on the foregoing technical solution, an absolute position of the first detection box may be corrected using the distance that is between the obstacle and the first lane line and that is output by the prediction model and the distance between the first detection box and the first lane line. Therefore, false detection and missed detection by the vehicle of the obstacle performing a cut-in can be avoided, thereby helping improve riding experience and riding safety of the user.

In the foregoing technical solution, after the absolute position of the first detection box is corrected, the relative positional relationship between the obstacle and the first lane line is determined based on the second detection box after correction and an absolute position of the first lane line. This is not limited in this embodiment of this application.

For example, before correcting the first detection box, the method further includes: controlling, based on the absolute position of the first detection box, a display apparatus to display a first three-dimensional model of the obstacle; and after the first detection box is corrected, controlling, based on an absolute position of the second detection box, the display apparatus to display a second three-dimensional model of the obstacle. Therefore, in a scenario in which the user manually drives the vehicle, the user may determine, using the information displayed by the display apparatus, a distance between the obstacle and the vehicle or determine whether the obstacle is performing a cut-in into the lane in which the vehicle is located.

In some possible implementations, correcting the first detection box based on the distance between the obstacle and the first lane line when the distance between the obstacle and the first lane line does not match the distance between the first detection box and the first lane line includes: correcting a position of the first detection box away from the lane line when a first distance between the obstacle and the first lane line is greater than a second distance between the first detection box and the first lane line and a difference between the first distance and the second distance is greater than a preset distance difference.

Based on the foregoing technical solution, when the distance between the obstacle and the lane line that is obtained using the prediction model is long and it is determined, based on the absolute position of the obstacle and the absolute position of the lane line, that the distance between the obstacle and the lane line is short, the absolute position of the obstacle may be corrected to cause the absolute position of the obstacle to be far away from the lane line. This avoids abrupt braking caused by false detection by the vehicle of the obstacle performing a cut-in, thereby helping improve riding experience of the user.

In some possible implementations, correcting the first detection box based on the distance between the obstacle and the first lane line when the distance between the obstacle and the first lane line does not match the distance between the first detection box and the first lane line includes: correcting a position of the first detection box toward the lane line when a first distance between the obstacle and the first lane line is less than a second distance between the first detection box and the first lane line and a difference between the first distance and the second distance is greater than a preset distance difference.

Based on the foregoing technical solution, when the distance between the obstacle and the lane line that is obtained using the prediction model is short and it is determined, using the absolute position of the obstacle and the absolute position of the lane line, that the distance between the obstacle and the lane line is long, the absolute position of the obstacle may be corrected to cause the absolute position of the obstacle to be close to the lane line. This avoids a collision accident caused by missed detection by the vehicle of the obstacle performing a cut-in, thereby helping improve riding safety of the user.

With reference to the first aspect, in some implementations of the first aspect, correcting the first detection box based on the distance between the obstacle and the first lane line includes: determining a traveling trajectory of the obstacle based on the distance between the obstacle and the first lane line; and correcting a heading of the first detection box based on the traveling trajectory of the obstacle.

Based on the foregoing technical solution, the traveling trajectory of the obstacle may be determined based on the distance that is between the obstacle and the first lane line and that is obtained using the prediction model. Therefore, the heading of the first detection box may be corrected based on the traveling trajectory. Therefore, false detection and missed detection by the vehicle of the obstacle performing a cut-in into the lane in which the vehicle is located can be avoided, thereby helping improve riding experience and riding safety of the user.

With reference to the first aspect, in some implementations of the first aspect, correcting the heading of the first detection box based on the traveling trajectory of the obstacle includes: correcting the heading of the first detection box based on the distance between the obstacle and the first lane line when a difference between a slope of the traveling trajectory and a slope of the first lane line is less than or equal to a first preset difference and a difference between a slope of the heading of the first detection box and the slope of the first lane line is greater than or equal to a second preset difference.

Based on the foregoing technical solution, when the difference between the slope of the traveling trajectory of the obstacle and the slope of the lane line is small and the difference between the slope of the heading of the first detection box and the slope of the lane line is large, it indicates that a result output by the prediction model indicates that the obstacle is not performing a cut-in into the lane in which the vehicle is located, and perception results of the two perception networks indicate that the obstacle is making a lane change into the lane in which the vehicle is located. In this case, the heading of the first detection box may be corrected to avoid abrupt braking caused by false detection by the vehicle of the obstacle performing a cut-in, thereby helping improve riding experience of the user.

In some possible implementations, the first preset difference is less than the second preset difference.

With reference to the first aspect, in some implementations of the first aspect, correcting the heading of the first detection box based on the traveling trajectory of the obstacle includes: correcting the heading of the first detection box based on the distance between the obstacle and the first lane line when a slope of the traveling trajectory is greater than a slope of the heading.

Based on the foregoing technical solution, when the slope of the traveling trajectory is greater than the slope of the heading of the obstacle, the heading of the first detection box may be corrected toward the lane line. Therefore, false detection and missed detection by the vehicle of the obstacle performing a cut-in can be avoided, thereby helping improve riding experience and riding safety of the user.

In some possible implementations, correcting the heading of the first detection box based on the distance between the obstacle and the first lane line when the slope of the traveling trajectory is greater than the slope of the heading of the obstacle includes: correcting the heading of the first detection box based on the distance between the obstacle and the first lane line when the slope of the traveling trajectory exhibits monotonicity and the slope of the traveling trajectory is greater than the slope of the heading.

According to a second aspect, a detection apparatus is provided. The apparatus includes: an obtaining unit, configured to obtain a first image of surroundings of a vehicle, where the vehicle is located in a first lane, the first image includes an obstacle and information about a first lane line associated with the obstacle, the first lane line is a lane line of a second lane, and the first lane is adjacent to the second lane; a prediction unit, configured to input the first image into a prediction model to obtain a distance between the obstacle and the first lane line, where the prediction model is trained using a sample data set, and the sample data set includes an image of a sample obstacle, an image of a second lane line associated with the sample obstacle, and a distance between the sample obstacle and the second lane line; and a determining unit, configured to determine, based on the distance between the obstacle and the first lane line, whether the obstacle is making a lane change into the first lane.

With reference to the second aspect, in some implementations of the second aspect, the apparatus further includes a correction unit, where the obtaining unit is further configured to obtain a first detection box of the obstacle and the information about the first lane line; the correction unit is configured to correct the first detection box based on the distance between the obstacle and the first lane line to obtain a second detection box; and the determining unit is configured to determine, based on the second detection box and the information about the first lane line, whether the obstacle is making the lane change into the first lane.

With reference to the second aspect, in some implementations of the second aspect, the correction unit is configured to correct the first detection box based on the distance between the obstacle and the first lane line when the distance between the obstacle and the first lane line does not match a distance between the first detection box and the first lane line.

With reference to the second aspect, in some implementations of the second aspect, the determining unit is further configured to determine a traveling trajectory of the obstacle based on the distance between the obstacle and the first lane line; and the correction unit is configured to correct a heading of the first detection box based on the traveling trajectory of the obstacle.

With reference to the second aspect, in some implementations of the second aspect, the correction unit is configured to correct the heading of the first detection box based on the traveling trajectory when a difference between a slope of the traveling trajectory and a slope of the first lane line is less than or equal to a first preset difference and a difference between a slope of the heading of the first detection box and the slope of the first lane line is greater than or equal to a second preset difference.

With reference to the second aspect, in some implementations of the second aspect, the correction unit is configured to correct the heading of the first detection box based on the traveling trajectory when a slope of the traveling trajectory is greater than a slope of the heading of the obstacle.

With reference to the second aspect, in some implementations of the second aspect, the first detection box is determined by a first perception network, and the information about the first lane line is determined by a second perception network.

According to a third aspect, a detection apparatus is provided. The apparatus includes a processing unit and a storage unit. The storage unit is configured to store instructions. The processing unit executes the instructions stored in the storage unit, to enable the apparatus to perform any possible detection method in the first aspect.

According to a fourth aspect, a detection system is provided. The control system includes a perception system and a computing platform. The computing platform includes any possible detection apparatus in the second aspect or the third aspect.

According to a fifth aspect, this application provides a vehicle. The vehicle includes any possible detection apparatus in the second aspect or the third aspect, or includes the detection system in the fourth aspect.

According to a sixth aspect, this application provides a computer program product. The computer program product includes computer program code. When the computer program code is run on a computer, the computer is enabled to perform any possible detection method in the first aspect.

It should be noted that all or a part of the computer program code may be stored in a first storage medium. The first storage medium may be packaged together with a processor, or may be packaged separately from a processor. This is not specifically limited in embodiments of this application.

According to a seventh aspect, this application provides a computer-readable medium. The computer-readable medium stores program code. When the computer program code is run on a computer, the computer is enabled to perform any possible detection method in the first aspect.

According to an eighth aspect, this application provides a chip. The chip includes a circuit. The circuit is configured to perform any possible detection method in the first aspect.

### BRIEF DESCRIPTION OF DRAWINGS

FIG. 1 is a functional block diagram of a vehicle according to an embodiment of this application;
FIG. 2 is a diagram of a system architecture according to an embodiment of this application;
FIG. 3 is a diagram of a distance between an obstacle and a lane line according to an embodiment of this application;
FIG. 4 is a diagram of an object-lane association OLA network according to an embodiment of this application;
FIG. 5A and FIG. 5B are a schematic flowchart of a method for correcting a detection box according to an embodiment of this application;
FIG. 6A and FIG. 6B are diagrams of correcting a detection box according to an embodiment of this application;
FIG. 7A and FIG. 7B are other diagrams of correcting a detection box according to an embodiment of this application;
FIG. 8A and FIG. 8B are other diagrams of correcting a detection box according to an embodiment of this application;
FIG. 9 shows a timestamp of a cut-in detected without using the OLA network and a timestamp of a cut-in detected using the OLA network according to an embodiment of this application;
FIG. 10 is a schematic flowchart of a detection method according to an embodiment of this application; and
FIG. 11 is a block diagram of a detection apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in the descriptions of embodiments, unless otherwise specified, "a plurality of" means two or more.

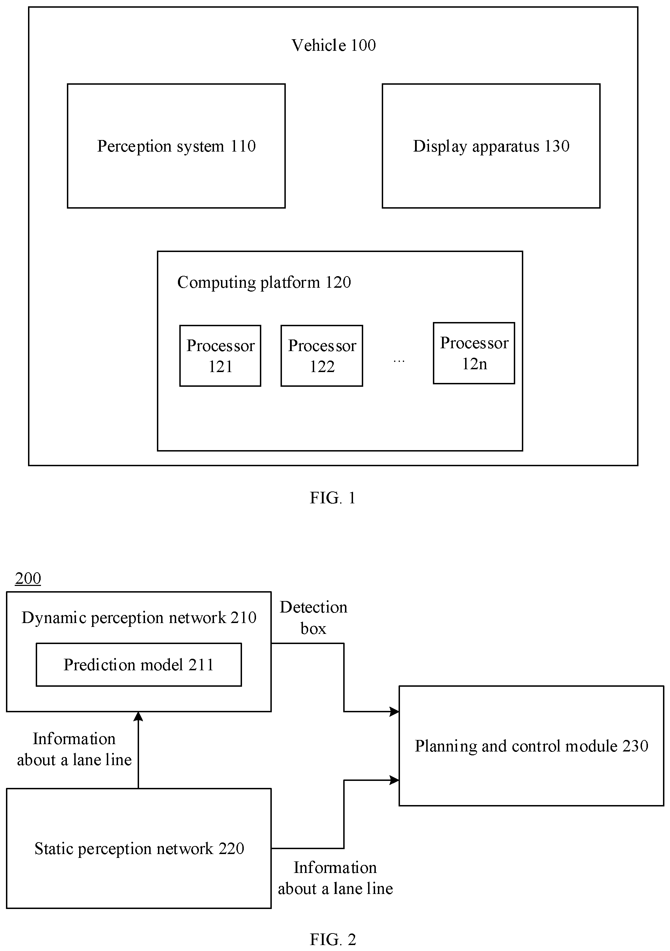

FIG. 1 is a functional block diagram of a vehicle 100 according to an embodiment of this application. The vehicle 100 may include a perception system 110, a computing platform 120, and a display apparatus 130. The perception system 110 may include one or more sensors that perceive information about a surrounding environment of the vehicle 100. For example, the perception system 110 may include a positioning system. The positioning system may be a global positioning system (global positioning system, GPS), a BeiDou system, or another positioning system. For another example, the perception system 110 may include one or more of an inertial measurement unit (inertial measurement unit, IMU), an acceleration sensor, a lidar, a millimeter-wave radar, an ultrasonic radar, and a camera apparatus. For example, the acceleration sensor may include a sensor for detecting an acceleration signal of an air suspension system, or may include a sensor for an acceleration signal of ESC.

Some or all of functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may achieve a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration file to implement configuration of the hardware circuit may be understood as a process in which the processor loads instructions to implement functions of some or all of the foregoing units. In addition, the processor may be alternatively a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

The display apparatus 130 in a cabin is mainly classified into two types: a first type is an in-vehicle display, and a second type is a projection display, for example, a head-up display (head-up display, HUD) apparatus. The in-vehicle display is a physical display, and is an important part of an in-vehicle infotainment system. A plurality of displays may be disposed in the cabin, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that there may be another type of HUD systems with evolution of technologies. This is not limited in this application.

The foregoing display apparatus 130 is described by using the in-vehicle display and the projection display as an example. Embodiments of this application are not limited thereto. For example, the display apparatus 130 may be alternatively a light display or a projection screen.

The vehicle 100 may include an advanced driver assistance system (advanced driver assistance system, ADAS). The ADAS obtains information from around a vehicle using a plurality of sensors (including, but not limited to, a lidar, a millimeter-wave radar, a camera apparatus, an ultrasonic sensor, a global positioning system, and an inertial measurement unit) on the vehicle, and analyzes and processes the obtained information, to implement functions such as obstacle perception, object recognition, vehicle positioning, path planning, and driver monitoring/reminder, thereby improving driving safety, automation, and comfort of the vehicle. In terms of logical functions, the ADAS system generally includes three main functional modules: a perception module, a planning and control module, and an execution module. The perception module perceives a surrounding environment of a vehicle body using a sensor, and inputs corresponding real-time data into a decision-making processing center. The perception module mainly includes an in-vehicle camera, an ultrasonic radar, a millimeter-wave radar, a lidar, or the like. The planning and control module makes a corresponding decision using a computing apparatus and an algorithm based on information obtained by the perception module. After receiving a decision signal from the planning and control module, the execution module performs a corresponding action, for example, driving, lane changing, steering, braking, or warning.

Currently, perception results of an absolute position of an obstacle and an absolute position of a lane line come from two different perception modules, for example, a dynamic perception network and a static perception network. A dynamic object (for example, a vehicle or a pedestrian) may be perceived by the dynamic perception network. The dynamic perception network may represent an obstacle in the three-dimensional world using a detection box (for example, a three-dimensional rectangular box, a cube (3D bounding box, 3D bbox), or a polygonal contour (polygon)). A static object (for example, a lane line and a traffic light) may be perceived by the static perception network. The static perception network may represent a lane line using a series of 3D points. To correctly detect a relative positional relationship between the obstacle and the lane line, the dynamic perception network and the static perception network need to accurately detect a 3D bbox of the obstacle and 3D points of the lane line, respectively. In this case, the dynamic perception network and the static perception network both have high accuracy requirements. Once a perception result of either perception network is inaccurate, the relative positional relationship between the obstacle and the lane line is calculated inaccurately. Consequently, the planning and control module makes a decision that compromises riding experience, thereby compromising riding experience of a user.

For example, noise exists in both a lidar and a camera. As a result, a 3D bbox detected by the dynamic perception network has problems such as position jumping and angle jitter. In addition, for the planning and control module, accuracy of the relative positional relationship between the obstacle and the lane line is more important than accuracy of the absolute positions of the obstacle and the lane line.

For example, for a truck that normally travels in a lane adjacent to a lane in which a vehicle is located, when slight angle jitter occurs during 3D bbox detection, a 3D bbox of the truck erroneously crosses the lane line. In this case, the planning and control module considers that the truck has a tendency to perform a cut-in into a lane in which an ego vehicle is located, and controls the vehicle to decelerate. Such false braking greatly compromises user experience.

For another example, for a truck that is performing a cut-in, if an angle deflection detected by a 3D bbox is not timely enough, the 3D bbox crosses the lane line with a delay. As a result, the planning and control module cannot make a braking decision in time. In a high-speed traveling scenario, such a problem is fatal, and users have significant concerns about the safety of autonomous driving.

Embodiments of this application provide a detection method and an apparatus, and a vehicle. A relative positional relationship between an obstacle and a lane line can be directly obtained by inputting data collected by a sensor into a prediction model. This can avoid a process in which an absolute position of the obstacle and an absolute position of the lane line are first obtained using a dynamic perception network and a static perception network, and then the relative positional relationship between the obstacle and the lane line is determined based on the absolute position of the obstacle and the absolute position of the lane line, and resolves a problem of misjudgment of a planning and control module caused by a perception accuracy error, thereby helping improve riding experience and riding safety of a user.

In this embodiment of this application, an example in which the obstacle is another vehicle in an adjacent lane is used for description. This embodiment of this application is not limited thereto. For example, in a scenario in which a vehicle passes through a downtown area at a low speed, the obstacle may be alternatively a pedestrian, a user riding a bicycle or an electric scooter, or the like.

FIG. 2 is a diagram of a system architecture 200 according to an embodiment of this application. The system architecture 200 includes a dynamic perception network 210, a static perception network 220, and a planning and control module 230. The dynamic perception network 210 may determine a detection box (3D bbox or polygon) of an obstacle or an absolute position of the obstacle based on data collected by a sensor. The dynamic perception network 210 includes a prediction model 211. The dynamic perception network 210 may input the data collected by the sensor (for example, an image collected by a camera) into the prediction model 211 to obtain a relative positional relationship between an obstacle and a lane line. The dynamic perception network 210 may correct the detection box of the obstacle based on the relative positional relationship that is between the obstacle and the lane line and that is output by the prediction model 211. Therefore, the corrected detection box may be sent to the planning and control module 230.

In this embodiment of this application, the prediction model 211 is added to the dynamic perception network 210. Therefore, the dynamic perception network 210 may correct, based on the relative positional relationship that is between the obstacle and the lane line and that is output by the prediction model 211, the detection box determined by the dynamic perception network 210. Therefore, the planning and control module 230 can make an accurate planning and control decision, thereby helping improve riding experience and riding safety of a user.

For example, the dynamic perception network 210 may determine a relative positional relationship 1 between the obstacle and the lane line based on the detection box of the obstacle determined by the dynamic perception network 210 and 3D points of the lane line determined by the static perception network 220. The dynamic perception network 210 may correct the detection box based on the relative positional relationship 1 and a relative positional relationship 2 that is between the obstacle and the lane line and that is output by the prediction model 211.

The prediction model 211 may be a neural network (neural network, NN), for example, a transformer, a multi-layer perceptron (multi-layer perceptron, MLP), a residual neural network (residual neural network, ResNet), or a recurrent neural network (recurrent neural network, RNN), or may be another machine learning algorithm, for example, a support vector machine (support vector machine, SVM) or a decision tree.

The following uses an example in which the prediction model 211 is an object-lane association (object-lane association, OLA) network for description.

To use information such as "it is very accurate to see from a camera whether a vehicle crosses a lane line" provided by a 2D image, an OLA network is used in this embodiment of this application. The OLA network is a network that can detect a distance from an obstacle to a lane line. A task of the OLA network is to directly predict the distance between the obstacle and the lane line. The distance may be a real physical distance between a wheel contact point and a lane line associated with the wheel contact point, and the lane line associated with the wheel contact point is selected based on a relationship regarding a lane in which an object is located, whether an object crosses a lane line, a distance, and the like.

The OLA network may be trained using a sample data set. The sample data set may include sample images (the sample images include an image of a sample obstacle and an image of a lane line associated with the sample obstacle) and a real physical distance between a wheel of the sample obstacle and the lane line.

For example, a traveling trajectory of a sample vehicle and a traveling trajectory of the sample obstacle may be planned in advance. The traveling trajectory of the sample obstacle may include distance variation information between the obstacle and the lane line. Therefore, real physical distances between the obstacle and the lane line at different moments can be annotated in advance. In a traveling process of the sample vehicle, a sample image collected by a camera of the sample vehicle may be obtained. The sample image includes information about an obstacle and information about a lane line. Therefore, because a traveling trajectory of an obstacle has been planned in advance, a sample training data set may be established. The sample training data set includes a correspondence among information about the sample obstacle in the sample image, information about the lane line in the sample image, and a real physical distance between the sample obstacle and the lane line. The OLA network can be trained using the sample training data set.

The training of the OLA network may be implemented on a cloud server.

For example, the distance between the obstacle and the lane line associated with the obstacle may meet one or more of the following conditions.
(1) Ensure the continuity of the distance between the obstacle and the lane line.
   For example, the distance between the obstacle and the lane line may be periodically obtained based o the OLA network. After each frame of image is input into an OLA model, a distance between one obstacle and the lane line can be obtained. Distances between the obstacle and the lane line corresponding to two adjacent frames of images are continuous, or a difference between distances between the obstacle and the lane line corresponding to two adjacent frames of images is less than a preset difference.
(2) If the distance is positive, the obstacle does not cross the lane line. If the distance is negative, the obstacle crosses the lane line.

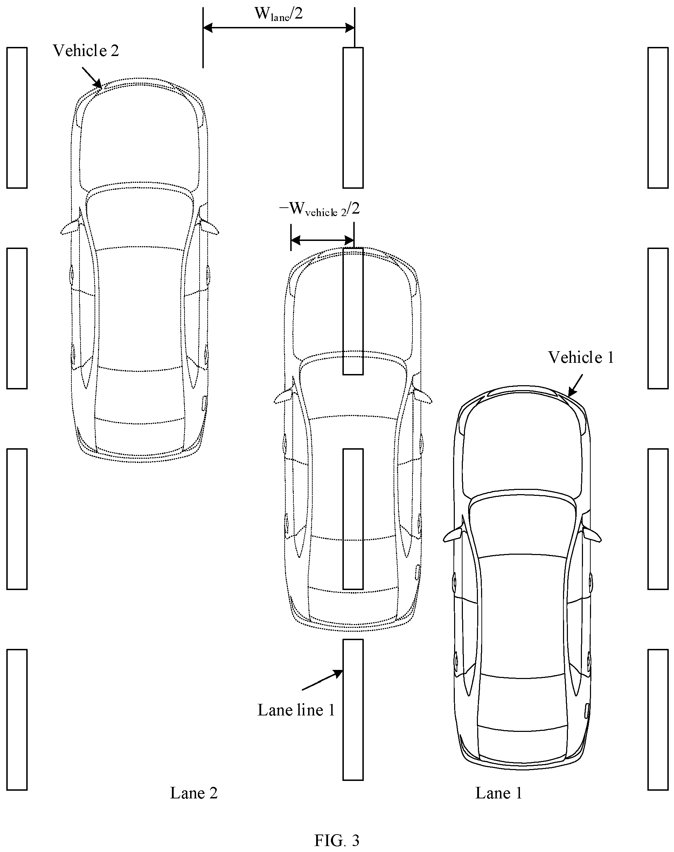

For example, FIG. 3 is a diagram of a distance between an obstacle and a lane line according to an embodiment of this application.

For example, a vehicle 1 is an ego vehicle, the vehicle 1 is located in a lane 1, an obstacle is a vehicle 2, and the vehicle 2 is located in a lane 2 (the lane 2 includes a lane line 1). A value range of a distance between the vehicle 2 and the lane line 1 may be [-W_{vehicle 2}/2, Wₗₐₙₑ/2], where -W_{vehicle 2}/2 indicates that the vehicle 2 travels crossing the lane line 1 and a distance between a wheel of the vehicle 2 and the lane line 1 is half of a width of the vehicle 2. Wₗₐₙₑ/2 indicates that the vehicle 2 travels without crossing the lane line 1 and the distance between the wheel of the vehicle 2 and the lane line 1 is half of a width of the lane 2.

(3) Select an obstacle based on a distance between a lane line and a wheel of an obstacle.

For example, as shown in FIG. 3, the lane 1 and the lane 2 are adjacent lanes, and the lane 1 and the lane 2 both include the lane line 1. The vehicle 1 may select a target obstacle in the lane 2 based on a distance between a wheel of an obstacle and the lane line 1. For example, when a distance between a right wheel of the vehicle 2 in the lane 2 and the lane line 1 is within [-W_{vehicle 2}/2, Wₗₐₙₑ/2], the vehicle 2 may be determined as the target obstacle.

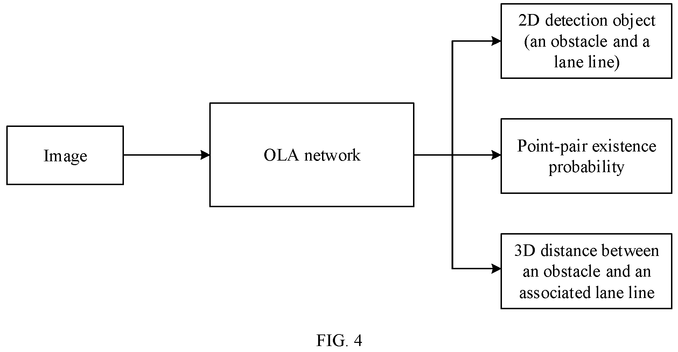

For example, FIG. 4 is a diagram of an OLA network according to an embodiment of this application.

An input of the OLA network may be an image collected by a camera of a vehicle, and an output of the OLA network may be a 2D detection object, a point-pair existence probability, and a 3D distance between an obstacle and an associated lane line. The 2D detection object includes information about the obstacle and the lane line in the image, and the point-pair existence probability may include an association degree between the obstacle and the lane line. The point-pair existence probability may be determined based on a lane in which the obstacle is located and a distance between the obstacle and the lane line. For example, as shown in FIG. 3, the vehicle 1 is located in the lane 1, and the OLA network may output a 2D image of the obstacle in the lane 1, a 2D image of the obstacle in the left lane (the lane 2) adjacent to the lane 1, and a 2D image of an obstacle in the right lane (a lane 3, not shown in the figure) adjacent to the lane 1. A dynamic perception network may first filter out the 2D image of the obstacle located in the lane 1. Next, the target obstacle is selected based on the distance between the obstacle in the adjacent lane and the lane line. For example, when it is determined that the distance between the vehicle 2 in the lane 2 and the lane line 1 is within [-W_{vehicle 2}/2, Wₗₐₙₑ/2], it may be determined that the vehicle 2 is the target obstacle and the lane line associated with the vehicle 2 is the lane line 1.

With the output of the OLA network available, an algorithm can be designed to utilize the output in the case of false detection or missed detection in a cut-in scenario. First, a target obstacle in a left or right adjacent lane is selected, and multi-frame OLA information (the OLA information includes a 3D distance between an obstacle and a lane line that is output by an OLA network) of the target obstacle is extracted to obtain a traveling trajectory of the obstacle relative to the lane line through fitting, and a positional relationship between a traveling trajectory and the lane line is obtained through comparison. If a position of a 3D bbox of the detected obstacle does not match a position determined based on the multi-frame OLA information, the traveling trajectory is used to correct the position of the 3D bbox.

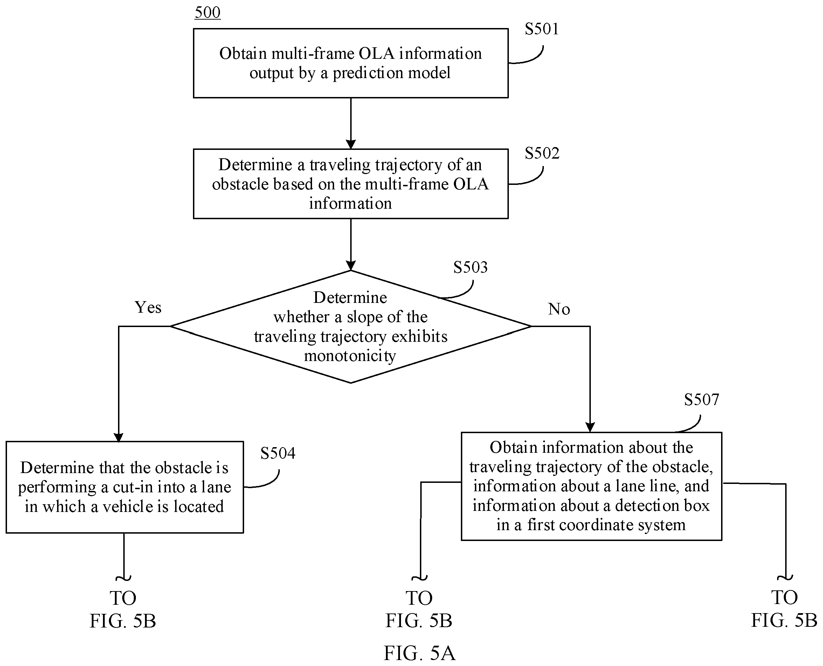

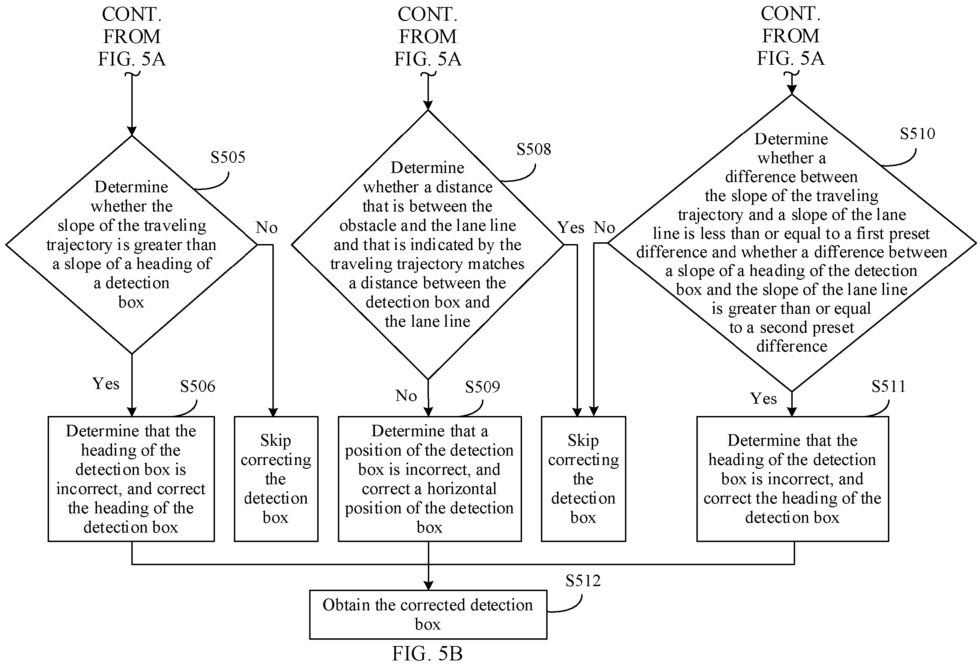

For example, FIG. 5A and FIG. 5B are a schematic flowchart of a method 500 for correcting a detection box according to an embodiment of this application. The correction method 500 may be performed by the foregoing dynamic perception network, or may be performed by the foregoing planning and control module. The correction method 500 includes the following steps.

S501: Obtain multi-frame OLA information output by a prediction model.

For example, the multi-frame OLA information includes distances between an obstacle and a lane line that are output by an OLA model at a plurality of moments.

S502: Determine a traveling trajectory of the obstacle based on the multi-frame OLA information.

S503: Determine whether a slope of the traveling trajectory exhibits monotonicity.

Optionally, determining whether the slope of the traveling trajectory exhibits monotonicity includes: determining, based on the lane line and the traveling trajectory, whether the slope of the traveling trajectory exhibits monotonicity.

The slope of the traveling trajectory may be determined by an angle between a tangential direction of a trajectory point on the traveling trajectory and a preset direction. A larger angle between the tangential direction of the trajectory point and the preset direction indicates a larger slope of the traveling trajectory.

For example, the preset direction may be a tangential direction of the lane line, or may be a direction in an odom coordinate system or a world coordinate system.

Determining whether the slope of the traveling trajectory exhibits monotonicity may be understood as determining whether the slope of the traveling trajectory gradually increases (which indicates that the obstacle is gradually performing a cut-in into a lane in which a vehicle is located), or may be understood as determining whether an angle between the tangential direction of the trajectory point on the traveling trajectory and the tangential direction of the lane line gradually increases.

If the slope of the traveling trajectory exhibits monotonicity, S504 to S506 are performed. If the slope of the traveling trajectory does not exhibit monotonicity, S507 to S511 are performed.

S504: Determine that the obstacle is performing a cut-in into the lane in which the vehicle is located.

S505: Determine whether the slope of the traveling trajectory is greater than a slope of a heading of a detection box.

Optionally, determining whether the slope of the traveling trajectory is greater than the slope of the heading of the detection box includes: determining whether the slope of the traveling trajectory is greater than the slope of the heading of the detection box and whether a difference between the slope of the traveling trajectory and the slope of the heading is greater than or equal to a preset difference.

The slope of the traveling trajectory may be determined by the angle between the tangential direction of the trajectory point on the traveling trajectory and the tangential direction of the lane line, and the slope of the heading may be determined by an angle between the heading and the tangential direction of the lane line. A larger angle indicates a larger slope.

Optionally, determining whether the slope of the traveling trajectory is greater than the slope of the heading of the detection box includes: determining whether a first angle is greater than a second angle, where the first angle may be the angle between the tangential direction of the trajectory point on the traveling trajectory and the tangential direction of the lane line, and the second angle may be the angle between the heading and the tangential direction of the lane line.

The first angle and the second angle are both acute angles.

Optionally, determining whether the difference between the slope of the traveling trajectory and the slope of the heading is greater than or equal to the preset difference includes: determining whether a difference between the first angle and the second angle is greater than or equal to a preset angle difference.

For example, when the first angle is greater than the second angle and the difference between the first angle and the second angle is greater than or equal to the preset angle difference, it may be determined that the heading is incorrect.

If the first angle is greater than the second angle and the difference between the first angle and the second angle is greater than the preset angle difference, S506 is performed. If the first angle is equal to the second angle or the difference between the first angle and the second angle is less than or equal to the preset angle difference, the detection box is not corrected.

S506: Determine that the heading of the detection box is incorrect, and correct the heading of the detection box.

For example, correcting the heading of the detection box includes: rotating the heading of the detection box toward the lane line, to cause an angle between the corrected heading of the detection box and the direction of the lane line to be greater than the angle between the heading of the detection box before correction and the direction of the lane line.

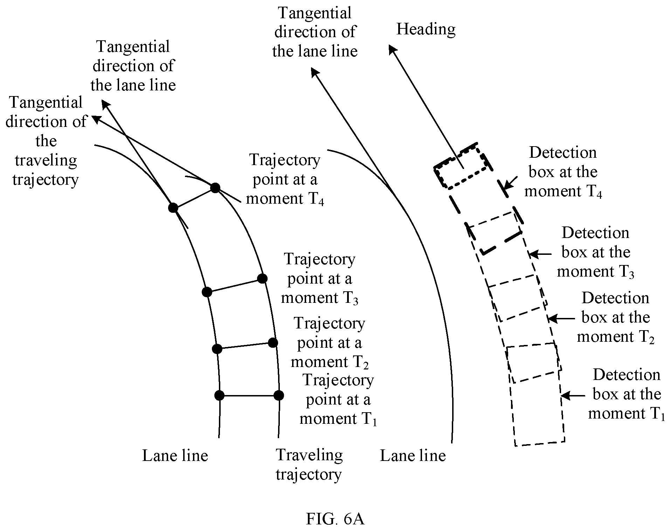

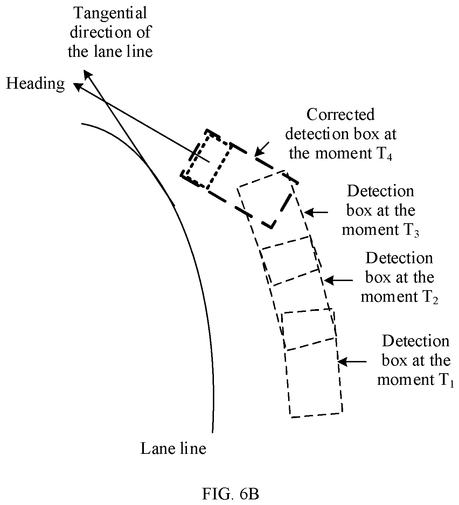

For example, FIG. 6A and FIG. 6B are diagrams of correcting a detection box according to an embodiment of this application.

As shown in FIG. 6A, a traveling trajectory of the vehicle may be obtained based on a result output by an OLA network. The traveling trajectory includes trajectory points at moments T₁ to T₄. At the moments T₁, T₂, and T₃, the difference between the first angle and the second angle is less than or equal to the preset angle difference. At the moment T₄, the first angle is greater than the second angle, and the difference between the first angle and the second angle is greater than the preset angle difference. Therefore, it may be determined that the heading determined by the dynamic perception network at the moment T₄ is incorrect, and the dynamic perception network may correct the heading.

It can be learned from FIG. 6A that the slope of the traveling trajectory is clearly greater than the slope of the heading at the moment T₄, or the first angle is clearly greater than the second angle at the moment T₄. This means that the result output by the OLA network indicates that the obstacle is performing a cut-in into the lane in which the vehicle is located, whereas the detection box output by the dynamic perception network and information about the lane line output by a static perception network indicate that the obstacle is not performing a cut-in into the lane in which the vehicle is located.

As shown in FIG. 6B, the dynamic perception network may correct the heading of the detection box at the moment T₄ based on the traveling trajectory. For example, the dynamic perception network may correct the heading of the detection box based on the angle between the tangential direction of the trajectory point and the tangential direction of the lane line at the moment T₄. For example, the angle between the corrected heading of the detection box and the tangential direction of the lane line may be equal to the angle between the tangential direction of the trajectory point and the tangential direction of the lane line at the moment T₄.

Therefore, the heading may be corrected based on the traveling trajectory when the slope of the traveling trajectory is greater than the slope of the heading. Therefore, missed detection by the vehicle of the obstacle performing a cut-in can be avoided, thereby helping improve riding safety of a user.

S507: Obtain information about the traveling trajectory of the obstacle, information about the lane line, and information about a detection box in a first coordinate system.

For example, the information about the detection box includes a vehicle heading of the detection box. The information about the lane line may be obtained from the static perception network, and the detection box may be determined by the dynamic perception network based on data collected by a sensor.

The first coordinate system may be a world coordinate system or an odom coordinate system.

S508: Determine whether the distance that is between the obstacle and the lane line and that is indicated by the traveling trajectory matches a distance between the detection box and the lane line.

Determining whether the distance that is between the obstacle and the lane line and that is indicated by the traveling trajectory matches the distance between the detection box and the lane line may be understood as determining whether a difference between a first distance and a second distance is greater than or equal to a preset distance difference, where the first distance is a distance that is between the obstacle and the lane line and that is indicated by the traveling trajectory, and the second distance is a distance between the detection box and the lane line.

For example, the preset distance difference is 0.1 meter.

If the first distance does not match the second distance, S509 is performed. If the first distance matches the second distance, the detection box is not corrected.

S509: Determine that a position of the detection box is incorrect, and correct a horizontal position of the detection box.

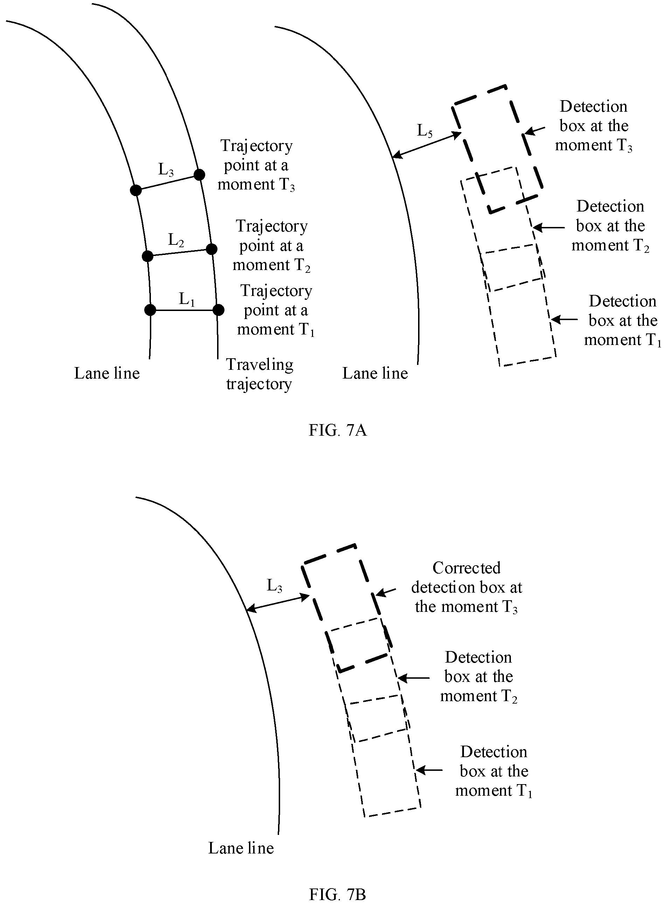

For example, FIG. 7A and FIG. 7B are diagrams of correcting a detection box according to an embodiment of this application.

As shown in FIG. 7A, a traveling trajectory of the vehicle may be obtained based on a result output by an OLA network. The traveling trajectory includes trajectory points at moments T₁ to T₄. At the moment T₁, a difference between a distance L₁ between the obstacle and the lane line and a distance between the detection box and the lane line at the moment T₁ is less than or equal to the preset distance difference (for example, 0.1 meter). At the moment T₂, a difference between a distance L₂ between the obstacle and the lane line and a distance between the detection box and the lane line at the moment T₂ is less than or equal to the preset distance difference. At the moment T₃, a difference between a distance L₃ between the obstacle and the lane line and a distance L₅ between the detection box and the lane line at the moment T₃ is greater than the preset distance difference (for example, 0.1 meter). Therefore, the dynamic perception network may determine that a position of the detection box output at the moment T₃ is incorrect and needs to be corrected.

As shown in FIG. 7B, the dynamic perception network may correct the position of the detection box at the moment T₃ based on the traveling trajectory. For example, a distance between the corrected detection box and the lane line may be equal to L₃.

Therefore, when the result output by the OLA network indicates that the distance between the obstacle and the lane line is short and it is determined, based on an absolute position of the obstacle output by the dynamic perception network and an absolute position of the lane line output by the static perception network, that the distance between the obstacle and the lane line is long, the absolute position of the obstacle may be corrected to cause the absolute position of the obstacle to be close to the lane line. This avoids a collision accident caused by missed detection by the vehicle of the obstacle performing a cut-in, thereby helping improve riding safety of the user.

S510: Determine whether a difference between the slope of the traveling trajectory and a slope of the lane line is less than or equal to a first preset difference and whether a difference between a slope of the heading of the detection box and the slope of the lane line is greater than or equal to a second preset difference.

The slope of the lane line may be determined based on an angle between the direction of the lane line and the preset direction. The slope of the traveling trajectory may be determined by the angle (for example, a third angle) between the tangential direction of the trajectory point on the traveling trajectory and the preset direction. The slope of the heading may be determined by an angle (for example, a fourth angle) between the heading and the preset direction. A larger angle indicates a larger slope.

The following uses an example in which the preset direction is the tangential direction of the lane line for description. In this case, the slope of the lane line may be 0, the slope of the traveling trajectory may be determined by the third angle, and the slope of the heading may be determined by the fourth angle.

The third angle and the fourth angle are both acute angles.

Optionally, the difference between the slope of the traveling trajectory and the slope of the lane line being less than or equal to the first preset difference includes: The third angle is less than or equal to a first preset angle. The third angle being less than or equal to the first preset angle indicates that the tangential direction of the trajectory point is almost parallel to the tangential direction of the lane line, indicating that the obstacle is not performing a cut-in into the lane in which the vehicle is located.

Optionally, the difference between the slope of the heading and the slope of the lane line being greater than or equal to the second preset difference includes: The fourth angle is greater than a second preset angle. The fourth angle being greater than the second preset angle indicates that the angle between the heading and the tangential direction of the lane line is excessively large, indicating that the obstacle is performing a cut-in into the lane in which the vehicle is located.

Optionally, the second preset angle is greater than the first preset angle.

For example, the first preset angle is 2°, and the second preset angle is 5°.

Optionally, in a frame, when the third angle is less than or equal to the first preset angle and the fourth angle is greater than the second preset angle, the dynamic perception network may immediately correct the heading in the corresponding frame. In a frame, when the third angle is less than or equal to the first preset angle, and the fourth angle is greater than the first preset angle and less than or equal to the second preset angle, instead of correcting the heading first, the dynamic perception network may continue to detect variations in the fourth angle and the angle between the tangential direction of the trajectory point on the traveling trajectory and the tangential direction of the lane line in a next frame (or next several frames). For example, if the angle between the tangential direction of the trajectory point and the tangential direction of the lane line in the next frame is less than or equal to the first preset angle, and the fourth angle is greater than the first preset angle and less than or equal to the second preset angle, the heading may be corrected.

When the difference between the slope of the traveling trajectory and the slope of the lane line is less than or equal to the first preset difference and the difference between the slope of the heading of the detection box and the slope of the lane line is greater than or equal to the second preset difference, S511 is performed. When the difference between the slope of the traveling trajectory and the slope of the lane line is greater than the first preset difference or the difference between the slope of the heading of the detection box and the slope of the lane line is less than the second preset difference, the detection box is not corrected.

S511: Determine that the heading of the detection box is incorrect, and correct the heading of the detection box.

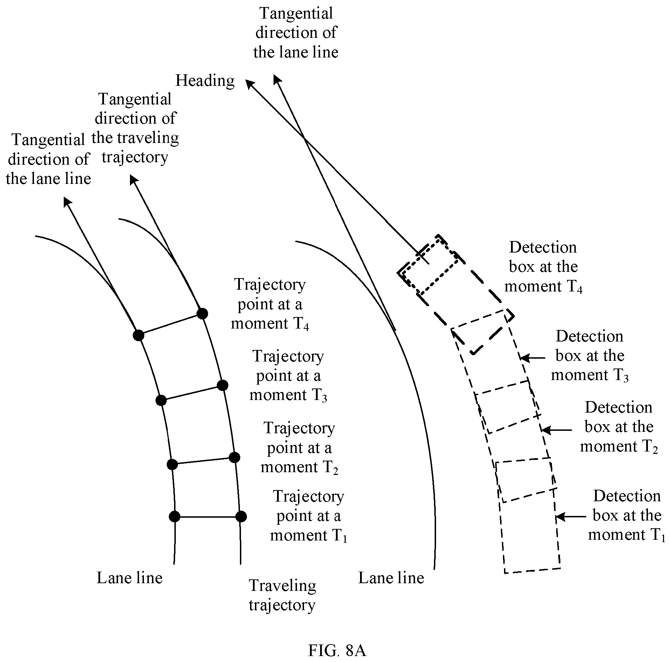

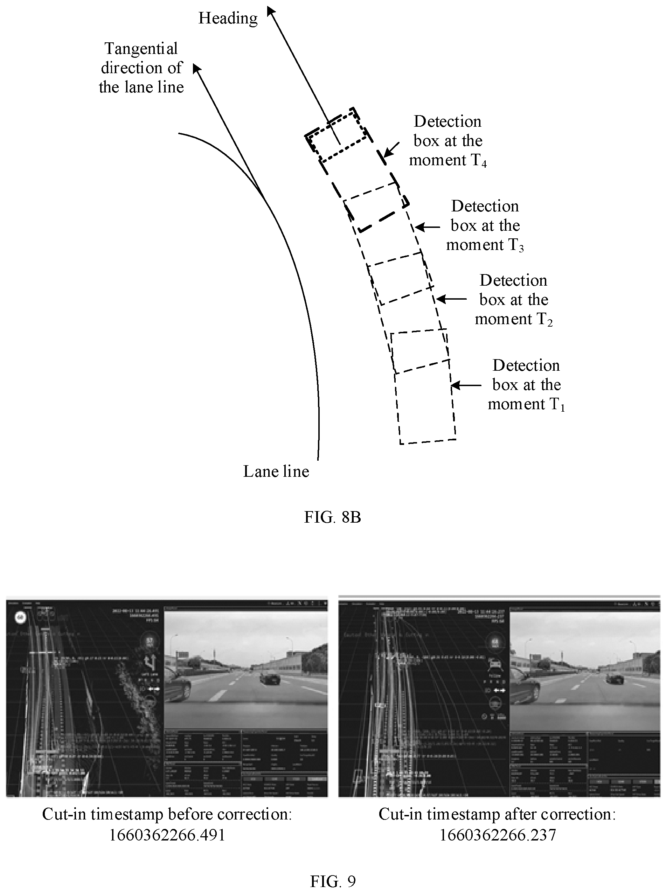

For example, FIG. 8A and FIG. 8B are diagrams of correcting a detection box according to an embodiment of this application.

As shown in FIG. 8A, a traveling trajectory of the vehicle may be obtained based on a result output by the OLA network. The traveling trajectory includes trajectory points at moments T₁ to T₄. At the moments T₁, T₂, and T₃, the third angle is less than or equal to the first preset angle and the fourth angle is less than or equal to the first preset angle. At the moment T₄, the third angle is less than or equal to the first preset angle and the fourth angle is greater than the second preset angle. Therefore, it can be determined that the heading determined by the dynamic perception network at the moment T₄ is incorrect, and the dynamic perception network may correct the heading.

It can be learned from FIG. 8A that, at the moment T₄, the third angle is less than or equal to the first preset angle and the fourth angle is greater than the second preset angle. This indicates that a result output using the OLA network indicates that the obstacle is not performing a cut-in into the lane in which the vehicle is located, whereas the detection box output using the dynamic perception network and information about the lane line output using a static perception network indicate that the obstacle is performing a cut-in into the lane in which the vehicle is located.

As shown in FIG. 8B, the dynamic perception network may correct the heading of the detection box at the moment T₄ based on the traveling trajectory. For example, the dynamic perception network may rotate the heading clockwise based on the angle between the tangential direction of the trajectory point and the tangential direction of the lane line at the moment T₄ to obtain the corrected detection box. For another example, the fourth angle between the corrected heading of the detection box and the tangential direction of the lane line may be equal to the angle between the tangential direction of the trajectory point and the tangential direction of the lane line at the moment T₄.

Therefore, when the difference between the slope of the traveling trajectory and the slope of the lane line is small and the difference between the slope of the heading of the first detection box and the slope of the lane line is large, it indicates that a result output by the prediction model indicates that the obstacle is not making a lane change into the lane in which the vehicle is located, and perception results of the dynamic perception network and the static perception network indicate that the obstacle is making the lane change into the lane in which the vehicle is located. In this case, the dynamic perception network can correct the heading of the detection box to avoid abrupt braking caused by false detection by the vehicle of the obstacle performing a cut-in, thereby helping improve riding experience of the user.

S512: Obtain the corrected detection box.

In the foregoing embodiment, an example in which the dynamic perception network corrects the detection box using the distance that is between the obstacle and the lane line and that is output by the OLA network is used for description. The dynamic perception network may send the corrected detection box to the planning and control module, so that the planning and control module may determine a relative positional relationship (for example, a 3D distance) between the obstacle and the lane line based on the corrected detection box output by the dynamic perception network and the information about the lane line output by the static perception network. Therefore, the planning and control module does not need to be improved. This embodiment of this application is not limited thereto.

For example, the distance between the obstacle and the lane line output by the OLA network may be alternatively directly sent to the planning and control module, so that the planning and control module may directly correct, based on the distance between the obstacle and the lane line, the detection box output by the dynamic perception network.

For another example, the distance between the obstacle and the lane line output by the OLA network may be alternatively directly sent to the planning and control module, so that the planning and control module may determine, based on the distance that is between the obstacle and the lane line and that is output by the OLA network, whether the obstacle is performing a cut-in into the lane in which the vehicle is located.

In this embodiment of this application, the absolute position (for example, the detection box) of the obstacle may be corrected using the relative positional relationship that is between the obstacle and the lane line and that is output by the prediction model, thereby avoiding missed detection or false detection of the obstacle performing a cut-in.

For example, when noise exists in the sensor of the vehicle, a moment at which the obstacle is performing a cut-in can be determined in advance by introducing the OLA network. FIG. 9 shows a timestamp (a cut-in timestamp before correction in the figure) of a cut-in detected without using the OLA network and a timestamp (a cut-in timestamp after correction in the figure) of a cut-in detected using the OLA network according to an embodiment of this application. It can be learned that compared with the case in which the OLA network is not used, a cut-in is detected about 250 milliseconds (ms) earlier using the OLA network.

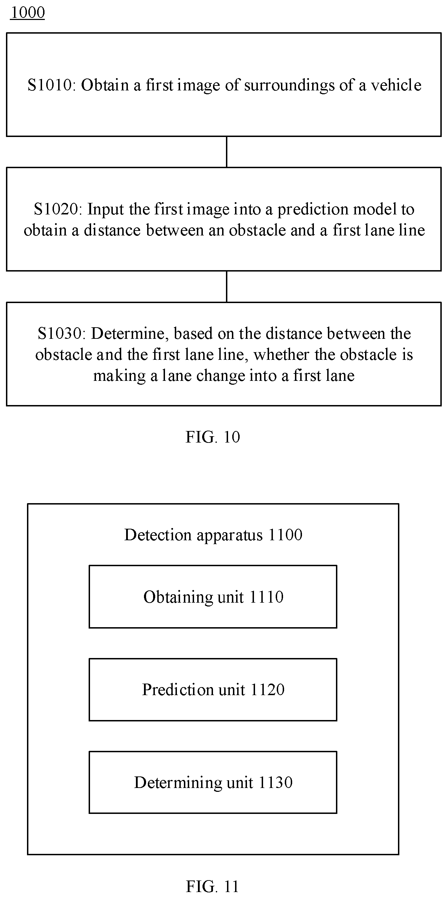

FIG. 10 is a schematic flowchart of a detection method 1000 according to an embodiment of this application. The method 1000 may be performed by the foregoing vehicle 100, or the method 1000 may be performed by the foregoing computing platform 120, or the method 1000 may be performed by a system including the computing platform 120 and the perception system 110, or the method 1000 may be performed by a system-on-a-chip (system-on-a-chip, SoC) on the computing platform 120, or the method 1000 may be performed by a processor, a chip, or a circuit on the computing platform 120. The method 1000 includes the following steps.

S1010: Obtain a first image of surroundings of a vehicle, where the vehicle is located in a first lane, the first image includes an obstacle and information about a first lane line associated with the obstacle, the first lane line is a lane line of a second lane, and the first lane is adjacent to the second lane.

Optionally, the obstacle may be a vehicle in the second lane.

S1020: Input the first image into a prediction model to obtain a distance between the obstacle and the first lane line, where the prediction model is trained using a sample data set, and the sample data set includes an image of a sample obstacle, an image of a second lane line associated with the sample obstacle, and a distance between the sample obstacle and the second lane line.

The foregoing detection manner is described using an example in which the image is input into the prediction model to predict the distance between the obstacle and the first lane line. This embodiment of this application is not limited thereto. For example, data collected by a sensing apparatus (for example, a lidar or a millimeter-wave radar) may be further input into the prediction model to obtain the distance between the obstacle and the first lane line.

Optionally, the distance between the obstacle and the first lane line may be a real physical distance or a pixel distance between the obstacle and the lane line.

For example, if an output result is the real physical distance between the obstacle and the lane line, a position and a heading of a detection box may be corrected using the real physical distance between the obstacle and the lane line.

For example, if the output result is the pixel distance between the obstacle and the lane line, the heading of the detection box may be corrected using the pixel distance between the obstacle and the lane line.

The real physical distance between the obstacle and the lane line may also be referred to as a 3D distance between the obstacle and the lane line, and the pixel distance between the obstacle and the lane line may also be referred to as a 2D distance between the obstacle and the lane line.

S1030: Determine, based on the distance between the obstacle and the first lane line, whether the obstacle is making a lane change into the first lane.

Optionally, the method 1000 further includes: obtaining a first detection box of the obstacle and the information about the first lane line; and determining, based on the distance between the obstacle and the first lane line, whether the obstacle is making the lane change into the first lane includes: correcting the first detection box based on the distance between the obstacle and the first lane line to obtain a second detection box; and determining, based on the second detection box and the information about the first lane line, whether the obstacle is making the lane change into the first lane.

Optionally, the first detection box is determined by a first perception network, and the information about the first lane line is determined by a second perception network.

Optionally, the first perception network and the second perception network establish connections to a planning and control module. For example, the first perception network may send information about the calculated detection box of the obstacle to the planning and control module, and the second perception network may send information about the calculated lane line to the planning and control module.

For example, the first perception network may be the foregoing dynamic perception network, and the dynamic perception network may be configured to detect a moving object around the vehicle.

For example, the second perception network may be the foregoing static perception network, and the static perception network may be configured to detect a stationary object around the vehicle.

Optionally, correcting the first detection box based on the distance between the obstacle and the first lane line includes: correcting the first detection box based on the distance between the obstacle and the first lane line when the distance between the obstacle and the first lane line does not match a distance between the first detection box and the first lane line.

Optionally, correcting the first detection box based on the distance between the obstacle and the first lane line when the distance between the obstacle and the first lane line does not match the distance between the first detection box and the first lane line includes: correcting a position of the first detection box away from the lane line when the distance between the obstacle and the first lane line is greater than the distance between the first detection box and the first lane line and a difference between the distance between the obstacle and the first lane line and the distance between the first detection box and the first lane line is greater than a preset difference.

Optionally, correcting the first detection box based on the distance between the obstacle and the first lane line when the distance between the obstacle and the first lane line does not match the distance between the first detection box and the first lane line includes: correcting a position of the first detection box toward the lane line when the distance between the obstacle and the first lane line is less than the distance between the first detection box and the first lane line and a difference between the distance between the obstacle and the first lane line and the distance between the first detection box and the first lane line is greater than a preset difference.

For example, as shown in FIG. 7A, when L₃ is less than L₅ and a distance difference between L₃ and L₅ is greater than a preset distance difference (for example, 0.1 meter) at a moment T₃, a position of the detection box at the moment T₃ may be corrected toward the lane line to obtain a corrected detection box shown in FIG. 7B.

Optionally, correcting the first detection box based on the distance between the obstacle and the first lane line includes: determining a traveling trajectory of the obstacle based on the distance between the obstacle and the first lane line; and correcting a heading of the first detection box based on the traveling trajectory of the obstacle.

For example, correcting the heading of the first detection box based on the traveling trajectory of the obstacle includes: correcting the heading of the first detection box based on a tangential direction of a trajectory point on the traveling trajectory of the obstacle, a direction of the lane line (for example, a tangential direction of the lane line), and the heading of the first detection box.

Optionally, correcting the heading of the first detection box based on the traveling trajectory of the obstacle includes: correcting the heading of the first detection box based on the traveling trajectory when a difference between a slope of the traveling trajectory and a slope of the first lane line is less than or equal to a first preset difference and a difference between a slope of the heading of the first detection box and the slope of the first lane line is greater than or equal to a second preset difference.

Optionally, the difference between the slope of the traveling trajectory and the slope of the first lane line being less than or equal to the first preset difference includes: The slope of the traveling trajectory is that a third angle between the tangential direction of the trajectory point on the traveling trajectory and a tangential direction of the lane line is less than or equal to a first preset angle.

Optionally, the difference between the slope of the heading of the first detection box and the slope of the first lane line being greater than or equal to the second preset difference includes: The slope of the heading may be that a fourth angle between the heading and a tangential direction of the lane line is greater than or equal to the fourth angle.

A larger angle indicates a larger slope.

For example, as shown in FIG. 8A and FIG. 8B, at a moment T₄, the third angle is less than or equal to the first preset angle and the fourth angle is greater than the second preset angle. Therefore, it can be determined that the heading determined by the dynamic perception network at the moment T₄ is incorrect, and the dynamic perception network may correct the heading.

The dynamic perception network may correct the heading of the detection box at the moment T₄ based on the traveling trajectory. For example, the dynamic perception network may rotate the heading clockwise based on the angle between the tangential direction of the trajectory point and the tangential direction of the lane line at the moment T₄ to obtain the corrected detection box. For another example, the fourth angle between the corrected heading of the detection box and the tangential direction of the lane line may be equal to the angle between the tangential direction of the trajectory point and the tangential direction of the lane line at the moment T₄.

Optionally, correcting the heading of the first detection box based on the traveling trajectory of the obstacle includes: correcting the heading of the first detection box based on the traveling trajectory when a slope of the traveling trajectory is greater than a slope of the heading of the obstacle.

Optionally, the slope of the traveling trajectory being greater than the slope of the heading of the first detection box includes: The slope of the traveling trajectory is greater than the slope of the heading, and a difference between the slope of the traveling trajectory and the slope of the heading is greater than or equal to a preset difference.

Optionally, the slope of the traveling trajectory may be determined by a first angle between the tangential direction of the trajectory point on the traveling trajectory and the tangential direction of the lane line, and the slope of the heading may be determined by a second angle between the heading and the tangential direction of the lane line.

Optionally, the difference between the slope of the traveling trajectory and the slope of the heading being greater than or equal to the preset difference includes: a difference between the first angle and the second angle is greater than a preset angle difference.

For example, as shown in FIG. 6A and FIG. 6B, at a moment T₄, the first angle is greater than the second angle, and the difference between the first angle and the second angle is greater than the preset angle difference. Therefore, it may be determined that the heading determined by the dynamic perception network at the moment T₄ is incorrect, and the dynamic perception network may correct the heading.

The dynamic perception network may correct the heading of the detection box at the moment T₄ based on the traveling trajectory. For example, the dynamic perception network may correct the heading of the detection box based on the angle between the tangential direction of the trajectory point and the tangential direction of the lane line at the moment T₄. For example, the angle between the corrected heading and the tangential direction of the lane line may be equal to the angle between the tangential direction of the trajectory point and the tangential direction of the lane line at the moment T₄.

FIG. 11 is a block diagram of a detection apparatus 1100 according to an embodiment of this application. The apparatus 1100 includes: an obtaining unit 1110, configured to obtain a first image of surroundings of a vehicle, where the vehicle is located in a first lane, the first image includes an obstacle and information about a first lane line associated with the obstacle, the first lane line is a lane line of a second lane, and the first lane is adjacent to the second lane; a prediction unit 1120, configured to input the first image into a prediction model to obtain a distance between the obstacle and the first lane line, where the prediction model is trained using a sample data set, and the sample data set includes an image of a sample obstacle, an image of a second lane line associated with the sample obstacle, and a distance between the sample obstacle and the second lane line; and a determining unit 1130, configured to determine, based on the distance between the obstacle and the first lane line, whether the obstacle is making a lane change into the first lane.

Optionally, the apparatus 1100 further includes a correction unit, where the obtaining unit 1110 is further configured to obtain a first detection box of the obstacle and the information about the first lane line; the correction unit is configured to correct the first detection box based on the distance between the obstacle and the first lane line to obtain a second detection box; and the determining unit 1130 is configured to determine, based on the second detection box and the information about the first lane line, whether the obstacle is making the lane change into the first lane.

Optionally, the correction unit is configured to correct the first detection box based on the distance between the obstacle and the first lane line when the distance between the obstacle and the first lane line does not match a distance between the first detection box and the first lane line.

Optionally, the determining unit 1130 is further configured to determine a traveling trajectory of the obstacle based on the distance between the obstacle and the first lane line; and the correction unit is configured to correct a heading of the first detection box based on the traveling trajectory of the obstacle.

Optionally, the correction unit is configured to correct the heading of the first detection box based on the distance between the obstacle and the first lane line when a difference between a slope of the traveling trajectory and a slope of the first lane line is less than or equal to a first preset difference and a difference between a slope of the heading of the first detection box and the slope of the first lane line is greater than or equal to a second preset difference.

Optionally, the correction unit is configured to correct the heading of the first detection box based on the traveling trajectory a slope of the traveling trajectory is greater than a slope of the heading of the first detection box.

Optionally, the first detection box is determined by a first perception network, and the information about the first lane line is determined by a second perception network.

For example, the obtaining unit 1110 may be the computing platform in FIG. 1, or a processing circuit, a processor, or a controller on the computing platform. For example, the obtaining unit 1110 is a processor 121 on the computing platform. The processor 121 may obtain first data collected by a sensor outside a cockpit (for example, the first image collected by a camera outside the cockpit).

For another example, the prediction unit 1120 may be the computing platform in FIG. 1, or a processing circuit, a processor, or a controller on the computing platform. For example, the prediction unit 1120 is a processor 122 on the computing platform. The processor 122 may input the first data obtained by the processor 121 into a preset model to obtain a 3D distance between the obstacle and the lane line.

For another example, the determining unit 1130 may be the computing platform in FIG. 1, or a processing circuit, a processor, or a controller on the computing platform. For example, the determining unit 1130 is a processor 123 on the computing platform. The processor 123 may determine, based on the distance between the obstacle and the lane line that is obtained by the processor 122, whether the obstacle is performing a cut-in into the lane in which the vehicle is located.

The function implemented by the obtaining unit 1110, the function implemented by the prediction unit 1120, and the function implemented by the determining unit 1130 may be implemented by different processors, or may be implemented by a same processor, or some of the functions may be implemented by a same processor. This is not limited in this embodiment of this application.

It should be understood that division of the units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration file to implement configuration of the hardware circuit may be understood as a process in which the processor loads instructions to implement functions of some or all of the foregoing units. In addition, the processor may be alternatively a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides a detection apparatus. The apparatus includes a processing unit and a storage unit. The storage unit is configured to store instructions. The processing unit executes the instructions stored in the storage unit, to enable the apparatus to perform the method or the steps performed in the foregoing embodiment.

Optionally, if the apparatus is located in a vehicle, the processing unit may be the processors 121 to 12n shown in FIG. 1.

An embodiment of this application further provides a detection system. The parking system may include a computing platform and a perception system. The computing platform may include the foregoing detection apparatus 1100.

An embodiment of this application further provides a vehicle. The vehicle may include the detection apparatus 1100 or a detection system.

An embodiment of this application further provides a computer program product. The computer program product includes computer program code. When the computer program code is run on a computer, the computer is enabled to perform the methods in the foregoing embodiments.

An embodiment of this application further provides a computer-readable medium. The computer-readable medium stores program code. When the computer program code is run on a computer, the computer is enabled to perform the methods in the foregoing embodiments.

An embodiment of this application further provides a chip. The chip includes a circuit, and the circuit is configured to perform the methods in the foregoing embodiments.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A detection method, comprising:
obtaining a first image of surroundings of a vehicle, wherein the vehicle is located in a first lane, the first image comprises an obstacle and information about a first lane line associated with the obstacle, the first lane line is a lane line of a second lane, and the first lane is adjacent to the second lane;
inputting the first image into a prediction model to obtain a distance between the obstacle and the first lane line, wherein the prediction model is trained using a sample data set, and the sample data set comprises an image of a sample obstacle, an image of a second lane line associated with the sample obstacle, and a distance between the sample obstacle and the second lane line; and
determining, based on the distance between the obstacle and the first lane line, whether the obstacle is making a lane change into the first lane.

2. The method according to claim 1, wherein the method further comprises:
obtaining a first detection box of the obstacle and the information about the first lane line; and
determining, based on the distance between the obstacle and the first lane line, whether the obstacle is making the lane change into the first lane comprises:
correcting the first detection box based on the distance between the obstacle and the first lane line to obtain a second detection box; and
determining, based on the second detection box and the information about the first lane line, whether the obstacle is making the lane change into the first lane.

3. The method according to claim 2, wherein correcting the first detection box based on the distance between the obstacle and the first lane line comprises:
correcting the first detection box based on the distance between the obstacle and the first lane line when the distance between the obstacle and the first lane line does not match a distance between the first detection box and the first lane line.

4. The method according to claim 2, wherein correcting the first detection box based on the distance between the obstacle and the first lane line comprises:
determining a traveling trajectory of the obstacle based on the distance between the obstacle and the first lane line; and
correcting a heading of the first detection box based on the traveling trajectory of the obstacle.

5. The method according to claim 4, wherein correcting the heading of the first detection box based on the traveling trajectory of the obstacle comprises:
correcting the heading based on the traveling trajectory when a difference between a slope of the traveling trajectory and a slope of the first lane line is less than or equal to a first preset difference and a difference between a slope of the heading of the first detection box and the slope of the first lane line is greater than or equal to a second preset difference.

6. The method according to claim 4, wherein correcting the heading of the first detection box based on the traveling trajectory of the obstacle comprises:
correcting the heading based on the traveling trajectory when a slope of the traveling trajectory is greater than a slope of the heading.

7. The method according to any one of claims 2 to 6, wherein the first detection box is determined by a first perception network, and the information about the first lane line is determined by the second perception network.

8. A detection apparatus, comprising:
an obtaining unit, configured to obtain a first image of surroundings of a vehicle, wherein the vehicle is located in a first lane, the first image comprises an obstacle and information about a first lane line associated with the obstacle, the first lane line is a lane line of a second lane, and the first lane is adjacent to the second lane;
a prediction unit, configured to input the first image into a prediction model to obtain a distance between the obstacle and the first lane line, wherein the prediction model is trained using a sample data set, and the sample data set comprises an image of a sample obstacle, an image of a second lane line associated with the sample obstacle, and a distance between the sample obstacle and the second lane line; and
a determining unit, configured to determine, based on the distance between the obstacle and the first lane line, whether the obstacle is making a lane change into the first lane.

9. The apparatus according to claim 8, wherein the apparatus further comprises a correction unit, wherein
the obtaining unit is further configured to obtain a first detection box of the obstacle and the information about the first lane line;
the correction unit is configured to correct the first detection box based on the distance between the obstacle and the first lane line to obtain a second detection box; and
the determining unit is configured to determine, based on the second detection box and the information about the first lane line, whether the obstacle is making the lane change into the first lane.

10. The apparatus according to claim 9, wherein the correction unit is configured to:
correct the first detection box based on the distance between the obstacle and the first lane line when the distance between the obstacle and the first lane line does not match a distance between the first detection box and the first lane line.

11. The apparatus according to claim 9, wherein
the determining unit is further configured to determine a traveling trajectory of the obstacle based on the distance between the obstacle and the first lane line; and
the correction unit is configured to correct a heading of the first detection box based on the traveling trajectory of the obstacle.

12. The apparatus according to claim 11, wherein the correction unit is configured to:
correct the heading based on the traveling trajectory when a difference between a slope of the traveling trajectory and a slope of the first lane line is less than or equal to a first preset difference and a difference between a slope of the heading of the first detection box and the slope of the first lane line is greater than or equal to a second preset difference.

13. The apparatus according to claim 11, wherein the correction unit is configured to:
correct the heading based on the traveling trajectory when a slope of the traveling trajectory is greater than a slope of the heading.

14. The apparatus according to any one of claims 9 to 13, wherein the first detection box is determined by a first perception network, and the information about the first lane line is determined by the second perception network.

15. A detection apparatus, comprising:
a memory, configured to store a computer program; and
a processor, configured to execute the computer program stored in the memory, to enable the apparatus to perform the method according to any one of claims 1 to 7.

16. A detection system, wherein the control system comprises a perception system and a computing platform, and the computing platform comprises the detection apparatus according to any one of claims 8 to 15.

17. A vehicle, comprising the detection apparatus according to any one of claims 8 to 15, or comprising the detection system according to claim 16.

18. A computer-readable storage medium, wherein the computer-readable storage medium stores a computer program, and when the computer program is executed by a computer, the method according to any one of claims 1 to 7 is implemented.

19. A chip, comprising a circuit, wherein the circuit is configured to perform the method according to any one of claims 1 to 7.

20. A computer program product, wherein the computer program product comprises computer program code, and when the computer program code is run on a computer, the method according to any one of claims 1 to 7 is implemented.
